# EUROPEAN PATENT APPLICATION

(11) **EP 4 610 471 A1**
(43) Date of publication of application: **03.09.2025**
(21) Application number: 25156767.3
(22) Date of filing: 10.02.2025
(51) Int. Cl.: F01D 5/00, B29C 33/30, B29C 39/26

(54) **MOLD ASSEMBLIES FOR USE IN CREATING REPLICAS OF A SURFACE OF A COMPONENT**

(30) Priority: 01.03.2024 US 202418592712
(71) Applicant: General Electric Technology GmbH, 5400 Baden (CH)
(72) Inventor: BARRERA, Miroslava Franco, 76146 Queretaro (MX); GAMERO MENDEZ, Jose Mikhail, 76146 Queretaro (MX); VAZQUEZ CARMONA, Cesar Octavio, 76146 Queretaro (MX)
(74) Representative: Openshaw & Co.

(57) **Abstract**

A mold (100) for use in creating a surface replication of a surface of a component including a body (102) including a first bracket (104) and an opposite second bracket (106). The first bracket (102) and the second bracket (106) each include an inner surface that defines at least a portion of a boundary of a mold cavity. The mold includes an adjustment mechanism (110) for selectively coupling the first and second brackets to the surface of the component (200) in sealing contact such that the mold cavity (114) is at least partially defined by the boundary of the mold and the surface of the component.

## Description

### TECHNICAL FIELD

The field of the disclosure relates generally to mold assemblies, and more particularly to mold assemblies for use in creating surface replicas of a component, such as a turbine blade.

### BACKGROUND

Surface replicas are commonly used to analyze surface features, e.g., defects, pitting, cracks, or other signs of wear, of a surface of a component, such as a blade of a turbine or compressor. Surface replicas may be formed by applying a layer of a solidifying compound, in liquid form, over the surface of the component and after the compound solidifies, the solidified replica may be inspected using optical microscopy, for example, or any other known inspection method. Conventionally, the solidifying compound is dispensed across the surface in a free form manner using an injection device. The liquid compound may have a viscosity that enables the compound to remain generally in the applied area on the surface of the component while it solidifies.

If the surface replica is created properly, i.e., the resulting solidified compound has a sufficient and/or uniform thickness, the replica may be able to preserve surface features. However, when the liquid solidifying compound is applied conventionally in a free form manner, particularly across edges of components, the resulting replica may not have a sufficient thickness, and/or if the liquid solidifying compound pools away from the edge, the resulting replica may crack and/or be unusable. As such, because of the potential of high quality losses, the use of conventional methods of creating surface replicas may be limited.

Accordingly, a need exists for a system and method of forming surface replicas that produces a resulting replica having a greater consistency and uniformity that facilitates preventing and/or reducing quality losses.

### SUMMARY

In one aspect, a mold for use in creating a surface replication of a surface of a component is provided. The mold includes a body including a first bracket and an opposite second bracket spaced a distance from the first bracket, the first bracket includes a first inner surface and the second bracket includes a second inner surface. The first and second inner surfaces define at least a portion of a boundary of a mold cavity. The mold assembly includes an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.

In another aspect, a mold system for use in creating a surface replication of a surface of a component is provided. The mold system including a reservoir for use in storing a solidifying compound, an injection tool fluidically connected to the reservoir, and a mold. The mold includes a body including a first bracket and an opposite second bracket spaced a distance from the first bracket, the first bracket includes a first inner surface and the second bracket includes a second inner surface. The first and second inner surfaces define at least a portion of a boundary of a mold cavity. The mold includes an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.

In another aspect, a method of creating a surface replication of a surface of a component is provided. The method includes providing a mold assembly defining a mold cavity, the mold assembly including a first bracket, a second bracket, and an adjustment mechanism for selectively increasing or decreasing a distance defined between the first and second brackets and adjusting the adjustment mechanism to selectively increase a distance defined between the first bracket and the second bracket of the mold assembly. The method includes inserting a portion of a component between the first bracket and the second bracket and adjusting the adjustment mechanism to cause the mold assembly to be in sealing contact with a portion of the surface of the component.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a front perspective view of an exemplary mold assembly.

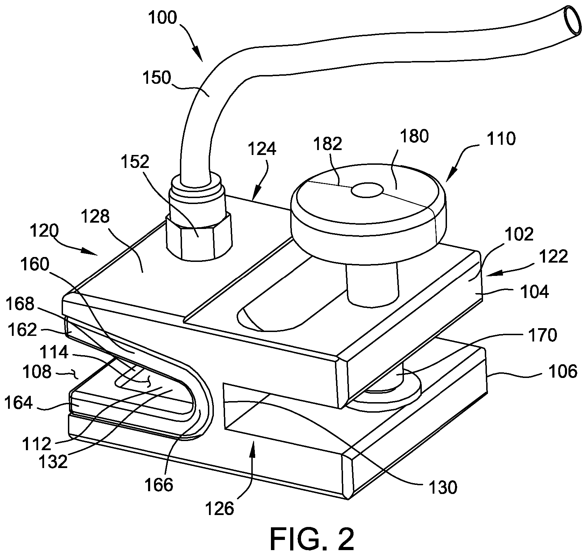

FIG. 2 is a rear perspective view of the mold assembly shown in FIG. 1.

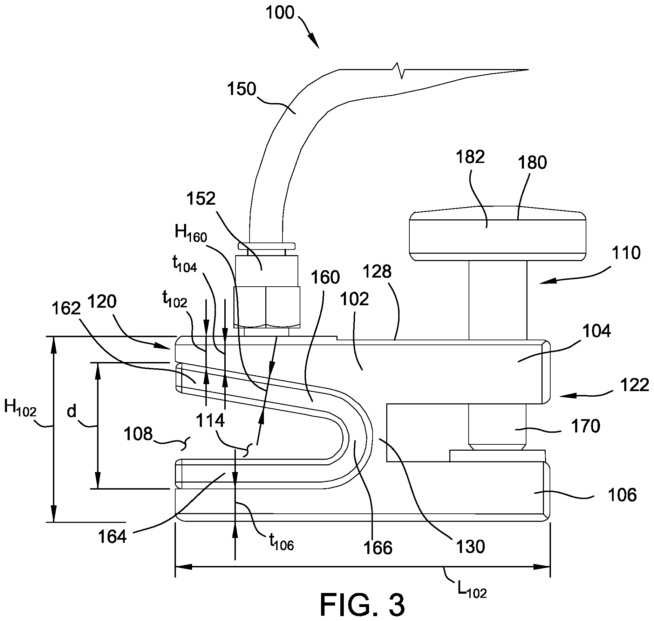

FIG. 3 is a side view of the mold assembly shown in FIG. 1.

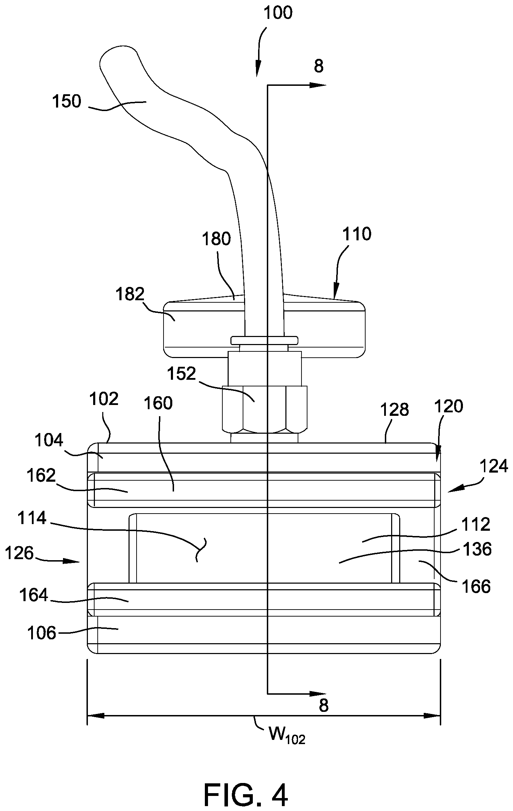

FIG. 4 is a front view of the mold assembly shown in FIG. 1.
FIG. 5 is a rear view of the mold assembly shown in FIG. 1.

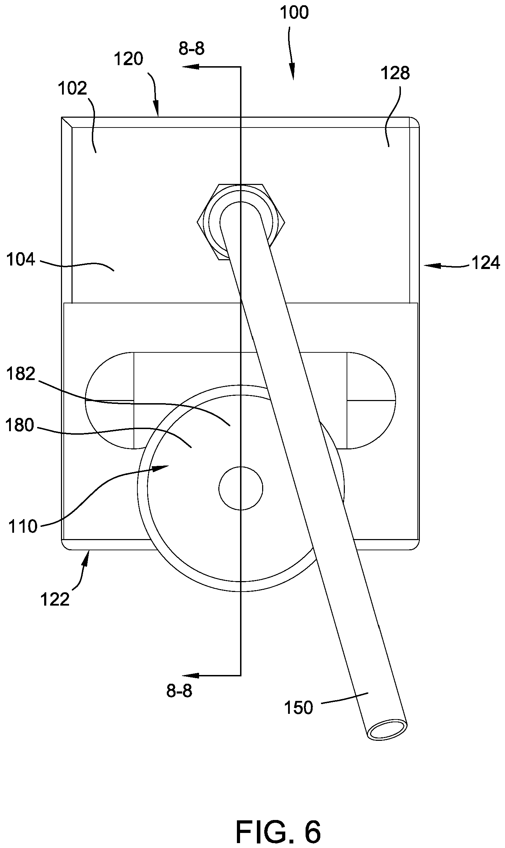

FIG. 6 is a top view of the mold assembly shown in FIG. 1.

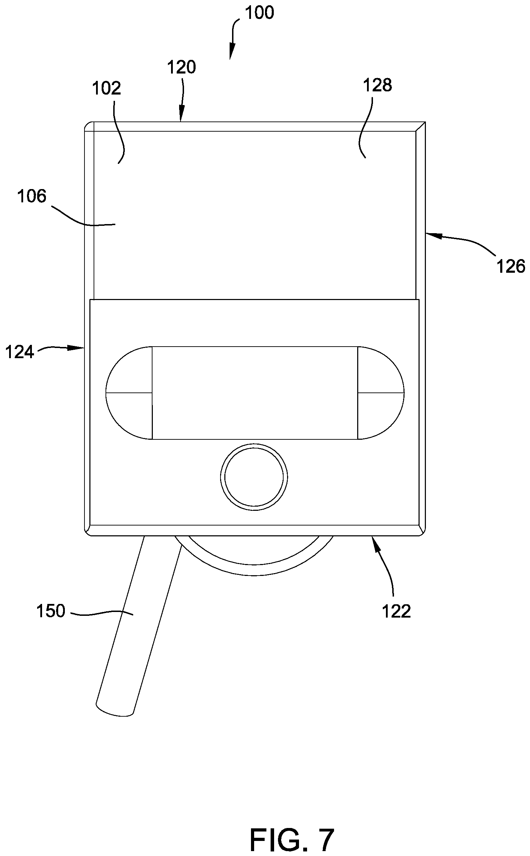

FIG. 7 is a bottom view of the mold assembly shown in FIG. 1.
FIG. 8 is a cross-sectional view of the mold assembly shown in FIG. 1.
FIG. 9 is a perspective view of an exemplary mold assembly coupled with a surface of an example turbine blade.
FIG. 10 is a perspective view of exemplary locations that the mold assembly shown in Fig. 1 may be coupled with a surface of an example turbine blade.
FIG. 11 is an example surface replica created using the mold assembly shown in Fig. 1
FIG. 12 is a perspective view of an exemplary solidifying compound injection device that may be used with the mold assembly shown in Fig. 1.
FIG. 13 is a process flow diagram of an exemplary method that may be used to create a surface replica using the mold assembly shown in Fig. 1.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings. The singular forms "a," "an," and "the" include plural references unless the context clearly dictates otherwise. "Optional" or "optionally" means that the subsequently described event or circumstance may or may not occur and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, embodiments "including" or "having" an element or a plurality of elements having a particular property may include additional such elements not having that property.

In exemplary embodiments described herein, a mold assembly, and the systems and methods associated therewith, may be used to create a replica of a surface of a component, referred to herein as a surface replica. The mold assembly defines at least partially, a portion of a boundary of a mold cavity, such that when the mold assembly is coupled with the component, the surface of the component also defines a portion of the boundary of the mold cavity. Surface replicas may be formed from a solidifying compound that is injected into the mold cavity in liquid form and is subsequently solidified to create a replica of the surface which may be inspected to detect surface defects and/or wear properties of the component, such as, for example and without limitation, pitting, erosion, cavitation, rubbing, impacts, nicks, and/or dents. The mold assembly is oriented such that the mold cavity forms a surface replica having a suitable thickness that is capable of capturing surface defects. The mold assembly may be used to form surface replicas having a generally uniform and/or consistent or symmetric thickness such that the surface replicas are less likely to break or crack. Replicas that are too thin may crack or break and/or may be too thin to effectively capture surface defects. The mold assembly, and the systems and methods associated therewith, produce surface replicas that have a suitable thickness that enables the surface replicas to capture surface details with improved resolution and accuracy.

Embodiments of the mold assembly are particularly useful for creating surface replicas for components that have well defined edges and/or borders. In embodiments described herein, the mold assembly is selectively adjustable to enable the mold assembly to be coupled over an edge and/or across component surfaces of different shapes and/or sizes. In some embodiments, the mold assembly may be transported to a component, e.g., to a turbine blade of a gas turbine engine, and the mold may be selectively coupled to and/or uncoupled from a turbine blade to enable a surface replica of the surface or edge of the turbine blade to be formed. In some embodiments, the mold is a clip-on mold that includes an adjustment mechanism that may be used to selectively couple and uncouple the mold to a component by hand without the use of additional tools. For example, in some embodiments, the mold may be selectively coupled to or uncoupled from the component without the use of any tools, such as wrenches or drills.

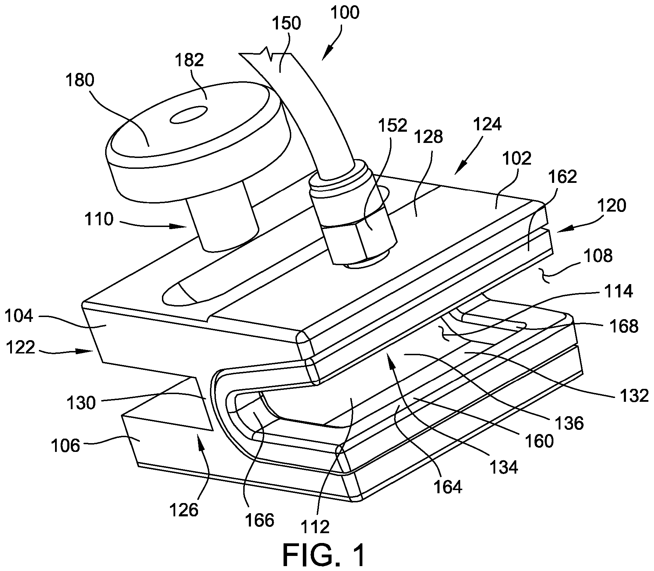

Referring now to the drawings, FIG. 1 is a perspective view of an exemplary mold assembly, indicated generally at 100. In the exemplary embodiment, the mold assembly 100 includes a body 102 including a first bracket 104 and an opposing second bracket 106 spaced a distance d away from the first bracket 104 such that a body opening 108 is defined. The mold assembly 100 also includes an adjustment mechanism 110 for selectively adjusting the relative position of the first bracket 104 and the second bracket 106, e.g., the adjustment mechanism 110 may be selectively used to widen or narrow the distance d defined between the first and second brackets 104 and 106, respectively. The first bracket 104 and the second bracket 106 may define, at least partially, a boundary 112 of a mold cavity 114, as described in more detail below.

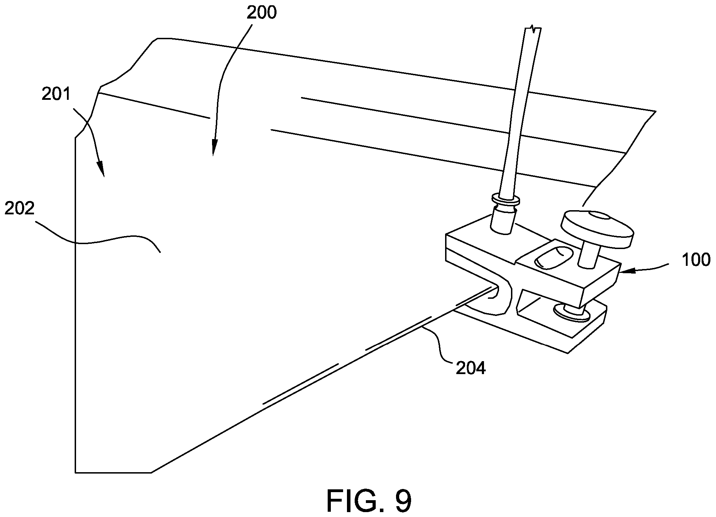

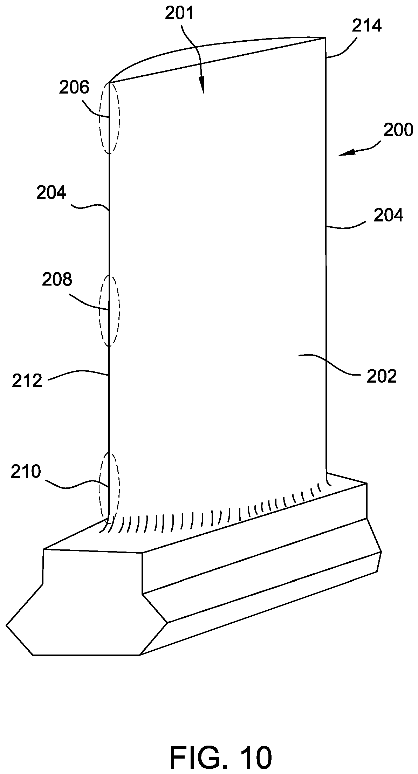

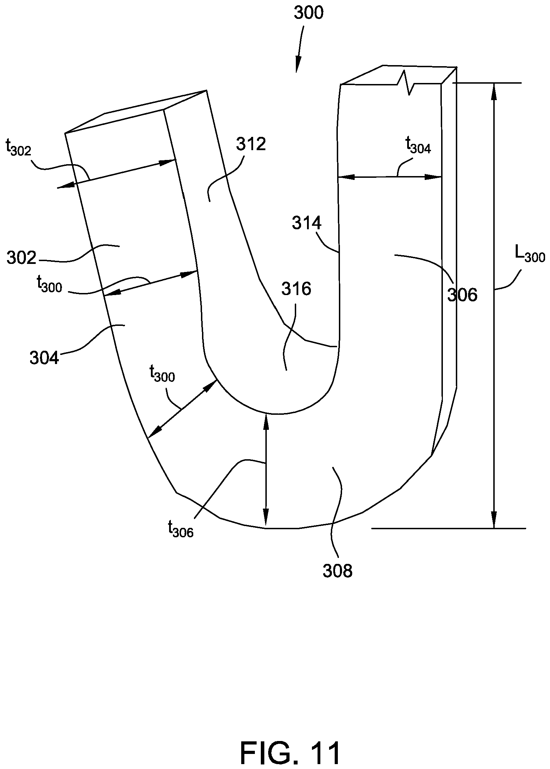

In embodiments described herein, the adjustment mechanism 110 enables the mold assembly 100 to be selectively coupled to, and/or uncoupled from, a component 200, as best seen in Figs. 9 and 10, for example. Selectively coupling the adjustment mechanism 110 to a component 200 enables a surface replica 300 formed of a solidifying compound 302, as best seen in Fig. 11, of a component surface 202 to be created. In some embodiments, the mold assembly 100 may be selectively couplable to any suitable component 200 to form a surface replica 300, for example and without limitation, a compressor blade, a turbine blade, a vane of an inlet guide, and the like, wherein resulting surface replica 300 has a consistent and suitable thickness that facilitates reducing quality losses and that facilitates an accurate and detailed surface replica 300 being created. During formation of a surface replica 300, at least a portion of the boundary 112 of the mold cavity 114 may sealingly contact the surface 202 of the component 200, such that the surface 202 of the component 200 also forms a portion of the boundary 112 of the mold cavity 114.

In some embodiments described herein, the first and second brackets 104 and 106, respectively, may be substantially rectangular in shape such that the body 102 has an overall body length L₁₀₂ extending between a front end 120 and an opposite back end 122, an overall body width W₁₀₂ extending between a first side 124 and an opposite second side 126, and an overall height H₁₀₂ extending between outer surfaces 128 of each of the first and second brackets 104 and 106, respectively. The first bracket 104 and the second bracket 106 may have a thickness t₁₀₂. In some embodiments, the thickness t₁₀₂ tapers, e.g., decreases, from the back end 122 towards the front end 120. In some embodiments, a thickness t₁₀₄ of the first bracket 104 is different than a thickness t₁₀₆ of the second bracket 106. The body 102 may be variably sized, e.g., the body length L₁₀₂ and the body width W₁₀₂, to facilitate transporting the mold assembly 100, e.g., in a tool case or tool bag, to and from a worksite where the component 200 is located. For example, the body length L₁₀₂ and the body width W₁₀₂ each may be less than about 5 inches, less than about 10 inches, and/or between about 5 inches to about 10 inches.

In the exemplary embodiment, the body 102 also includes a middle bracket 130 that extends between the first and second brackets 104 and 106, respectively, and that is between the front and back ends 120 and122, respectively, of the mold assembly 100. In some embodiments, the middle bracket 130 is approximately half-way between the front and back ends 120 and 122, respectively. The middle bracket 130 may also define at least a portion of the boundary 112 of the mold cavity 114. For example, the second bracket 106 includes a second inner surface 132, the first bracket 104 includes a first inner surface 134, and the middle bracket 130 includes a middle inner surface 136, and at least a portion of the first, second, and middle inner surfaces 132, 134, and 136, respectively, may define a portion of the boundary 112 of the mold cavity 114. In some embodiments, at least a portion of the first inner surface 134, the second inner surface 132, and/or the middle inner surface 136 may be substantially planar and/or include at least a portion that is substantially planar. In some embodiments, at least one of the first inner surface 134, the second inner surface 132 and/or the middle inner surface 136 may be concave, and/or may include one or more sections that are arcuate that form at least a portion of the boundary 112. For example, in the illustrated embodiment best seen in Fig. 1, the middle inner surface 136 is concave. In some alternative embodiments, the inner surfaces 132, 134, and/or 136, may include a raised boundary (not shown) for use in engaging the surface of the component 200.

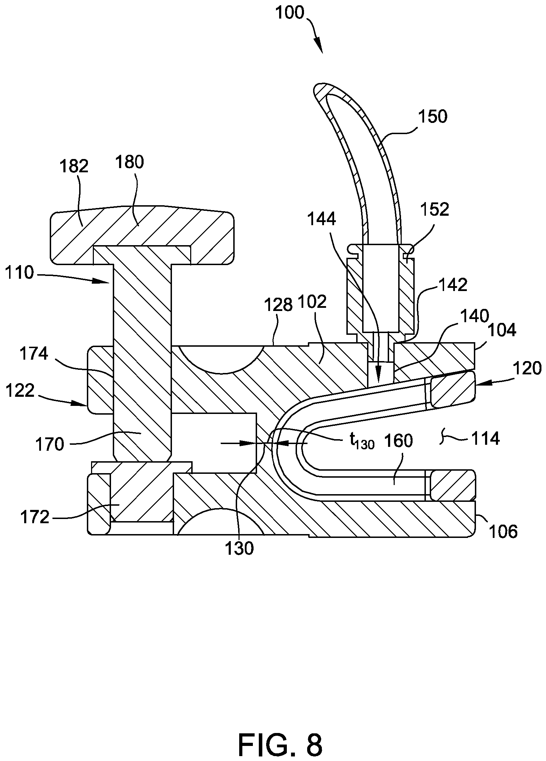

The mold assembly 100, in the exemplary embodiment, also includes a passage 140 defined within, and extending through, the body 102 from an inlet 142 formed on the outer surface 138 of the body 102 to an outlet 144 formed on the boundary 112. *See* Fig. 8, for example. The solidifying compound 302 may flow through the body opening 108 and through the passage 140 to fill the mold cavity 114. In some embodiments, a hose 150 may be coupled to the inlet 142 and/or to the passage 140 to facilitate injecting a solidifying compound 302, in liquid form, through the hose 150 and through the passage 140 to fill the mold cavity 114. In some embodiments, either the hose 150 and/or the body 102 includes a connection mechanism 152. In some embodiments, the passage 140 may include threads and/or any other fastening mechanism used to connect the hose 150 to the passage 140.

In some embodiments, the passage 140 extends through either the first bracket 104 and/or the second bracket 106. In some alternative embodiments, the passage 140 may extend through the middle bracket 130. In some embodiments, the hose 150 may be inserted into the inlet 142 of the passage 140, to enable the solidifying compound 302 to be pushed through the hose 150 and passage 140, into the mold cavity 114. In some alternative embodiments, the passage 140 may include threads to enable the hose 150 to securely couple to the passage 140. The passage 140 may have any suitable shape or size, which facilitates the passage 140 being connected to the hose 150. For example, in some embodiments, the hose 150 and the passage 140 may be relatively sized to enable the hose 150 to frictionally engage with the passage 140 in a secure connection between the hose 150 and the passage 140. In some embodiments, the hose 150 may be secured to the passage 140 using in-line or elbow-shaped push-fit connectors or compression fittings.

In some embodiments, the mold assembly 100 includes a seal 160 that at least partially defines the boundary 112 of the mold cavity 114. In some embodiments, the seal 160 may be a continuous seal formed integrally with, and/or coupled to, the first, second, and middle inner surfaces 132, 134, and 136, respectively, and extending therefrom around a perimeter of the first, second, and middle inner surfaces 132, 134, 136. The seal 160, in the exemplary embodiment, includes a first seal portion 162, coupled to the first bracket 104, a second seal portion 164, coupled to the second bracket 106, and a middle seal portion 166 coupled to the middle bracket 130. When the mold assembly 100 is coupled with the component 200, the entire seal 160 is sealingly coupled against the surface 202 of a component 200. The seal 160 includes an inner surface 168 that defines, at least partially, a portion of the boundary 112 of the mold cavity 114. As such, a height h₁₆₀ of the seal 160 forms, or defines, a thickness t₃₀₀ of the surface replica 300, as best seen in Fig. 11. In some embodiments, inner surfaces 132, 134, and/or 136 may include a chamfered portion that tapers against the seal 160.

In some alternative embodiments, the mold assembly 100 includes two separate seals 160, for example, the mold assembly 100 may include an upper seal, not shown, formed on the first inner surface 134 and a separate lower seal, not shown formed on the second inner surface 132. In this alternative embodiment, when the mold assembly 100 is sealingly coupled against the component 200, a portion of the upper and lower seals are positioned in sealing contact against the component 200, creating one or more separate surface replicas and/or a single surface replica covering corners, edges, and/or irregular edge-shaped components or features.

In some embodiments, the seal 160 may be fabricated from a flexible material, e.g., rubber, rubber compound, or an elastomeric material, which compresses when a pressure and/or a force is applied. The seal 160 may be fabricated from any other suitable material, e.g., cork, silicone, neoprene, Teflon, plastic, and/or any other materials that enables the seal 160 to function as described herein. In some embodiments, the seal 160 may be fabricated from a different material than the rest of the body 102, e.g., the first, second, and/or middle brackets 104, 106, and 130, respectively. When the mold assembly 100 is coupled and clamped against the component 200, the seal 160 sealingly engages the surface 202 of the component 200.

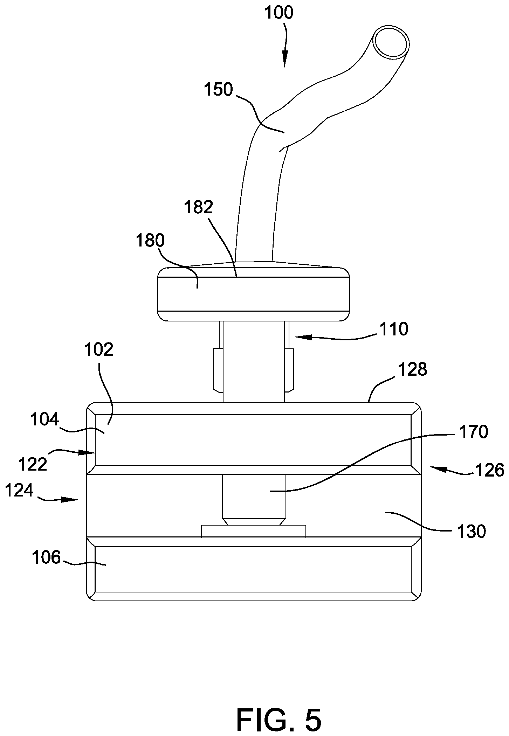

With reference to Figs. 5 and 8, in some embodiments, the adjustment mechanism 110 may include a threaded bolt 170 that extends between the first bracket 104 and the second bracket 106. The adjustment mechanism 110 may include a threaded bore 172 defined within at least one of the first bracket 104 and/or the second bracket 106, and a through bore formed in the other of the first bracket 104 or second bracket 106. The threaded bolt 170 may be coupled within the threaded bore 172. Tightening the bolt 170 causes the first bracket 104 and the second bracket 106 to move towards each other, thus narrowing the distance d defined between the first and second brackets 104 and 106, respectively. Likewise, loosening of the bolt 170 may cause the first bracket 104 and the second bracket 106 to move away from each other, thus increasing the distance d defined between the first and second brackets 104 and 106, respectively. In some embodiments, tightening the bolt 170 causes the first bracket 104 to be pulled towards the second bracket 106 inducing a compressive force on the middle bracket 130. The middle bracket 130 may have a thickness t₁₃₀ that is relatively thin, and/or the middle bracket 130 may have suitable material properties, that causes the middle bracket 130 to function as a biasing mechanism, and the compressive force causes the middle bracket 130 to bend and/or compress, to narrow the distance d defined between the first and second brackets 104 and 106, respectively. Likewise, in such an embodiment, loosening of the bolt 170 decreases the compressive force induced on the middle bracket 130 and the middle bracket 130 returns to its original length, restoring the distance d defined between the first and second brackets 104, 106.

In some embodiments, the adjustment mechanism 110 includes a handle 180 that may be used to selectively actuate the adjustment mechanism 110. In the illustrated embodiment, the handle 180 includes a knob 182 that a user may grip to selectively tighten or loosen the bolt 170. In other embodiments, the handle 180 may have any other suitable shape and/or size that enables the adjustment mechanism 110 to function as described herein. The handle 180 may be used to selectively adjust the adjustment mechanism 110 such that the first bracket 104 and the second bracket 106 may be moved towards each other or away from each other without the use of an additional tool. For example, the adjustment mechanism 110 may be used to couple the mold assembly 100 to a component 200 without the use of any other tool.

In some alternative embodiments, the adjustment mechanism 110 may include any other suitable adjustment mechanism, such as spring-assisted clamps and press-fit clamps. For example, adjustment mechanism 110 may include a biasing mechanism, e.g., a torsion or helical spring (not shown), that biases the upper and second bracket 106 towards each other. In some alternative embodiments, the adjustment mechanism 110 may include a rail mechanism (not shown) enabling translation between the first bracket 104 and second bracket 106. In some alternative embodiments, the adjustment mechanism 110 may include a hinge (not shown) between the first bracket 104 and the second bracket 106 that enables rotation between the first bracket 104 and the second bracket 106.

In some alternative embodiments, the adjustment mechanism 110 includes a clamp (not shown) that is connected with a threaded portion of the bolt 170 such that rotations of the clamp cause translations of the clamp relative to the threaded bolt 170. Tightening of the clamp causes the clamp to press against the first bracket 104, causing the first bracket 104 to move closer to the second bracket 106 such that the distance d is narrowed.

In reference to Figs. 9 and 10, the mold assembly 100 may be used to create a surface replica 300 of a surface 202 of a component 200, e.g., turbine blade 201. Fig. 9 shows the mold assembly 100 coupled to the surface 202 at an edge 204 of a turbine blade 201. Fig. 10 shows another exemplary component 200, embodied as a turbine blade 201, showing various locations along the edge 204 of the turbine blade 201 where the mold assembly 100 may be sealingly coupled to the component 200, to create a surface replica 300. For example, the mold assembly 100 may be sealingly coupled to a tip portion 206, a mid-portion 208, and/or a root portion 210 of a leading edge 212 of the turbine blade 201, for example. In some other embodiments, the mold assembly 100 may be sealingly engaged with a trailing edge 214 of the turbine blade 201. In alternative embodiments, the mold assembly 100 may be sealingly coupled to any suitable surface 202 of any suitable component 200 for forming a surface replica 300 of the surface 202.

In reference to Fig. 11, an exemplary surface replica 300 formed using the mold assembly 100 is shown. The solidifying compound 302, initially in a liquid form, may be injected into the mold cavity 114 such that the compound 302 surrounds and contacts the surface 202 of the component 200. The solidified compound 302 forms the surface replica 300 with a first side 304 formed, at least partially, by the first bracket 104 and/or the first seal portion 162 of the seal 160. Similarly, a second side 306 of the surface replica 300 is formed at least partially by the second bracket 106 and/or the second seal portion 164 of the seal 160. The surface replica 300 includes a middle portion 308 formed at least partially by the middle bracket 130 and the middle seal portion 166. The first side 304 includes a first inner surface replica 312, the second side 306 includes a second inner surface replica 314, and the middle portion 308 includes a middle inner surface replica 316. The first inner surface replica 312 replicates a first side of the component 200 and the second inner surface replica 314 replicates an opposing second side of the component 200. The middle inner surface replica 316 replicates at least a portion of the edge 204 of the component 200.

The surface replica 300 may be formed of a solidifying compound 302 shaped by the boundary 112 and the surface 202. In the exemplary embodiment, the mold assembly 100, and in particular, the boundary 112 of the mold cavity 114 form surface replicas 300 which have a suitable thickness t₃₀₀, e.g., a substantially uniform thickness t₃₀₀ on opposite sides of the surface replica 300, and/or a thickness t₃₀₀ suitable for enabling the surface replica 300 to capture surface features, such as, but not limited to pitting, erosion, cavitation, rubbing, impacts, nicks, dents, and any other indications, for inspection. In some embodiments, the solidifying compound 302 may be a fast-curing silicone rubber having two primary components: a polymer, and a curing agent. The components are mixed together immediately prior to applying the solidifying compound 302 to the surface 202 of the component 200 within the mold cavity 114. A thickness t₃₀₄ of the first side 304 and a thickness t₃₀₆ of the second side 306 are generally constant. For example, t₃₀₄ and t₃₀₆ are generally constant along a length L₃₀₀ of the surface replica 300. In some embodiments, the thickness t₃₀₄ and t₃₀₆ may be approximately the same. A thickness t₃₀₈ of the middle portion 308 may also be approximately the same as the thickness t₃₀₄ and t₃₀₆.

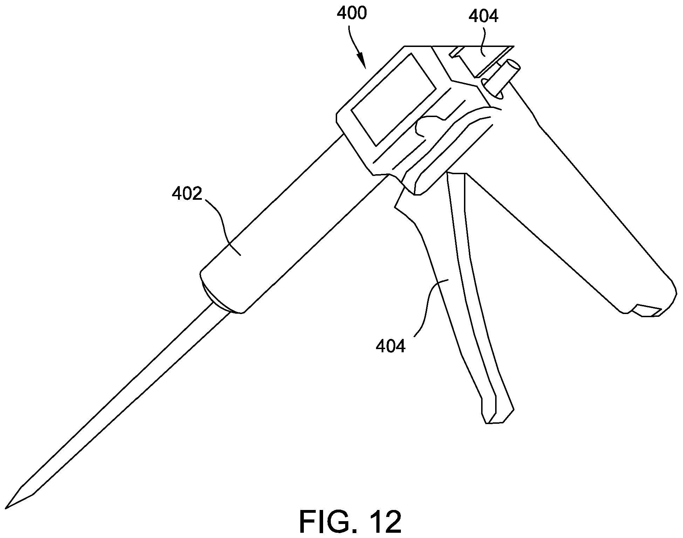

Fig. 12 illustrates an exemplary injector tool 400 for use with the mold assembly 100. The injector tool may include a reservoir 402 that stores the solidifying compound 302 in a liquid form. The injector device includes an actuator 404 and a trigger 406 that selectively cause the actuator 404 to force or inject, the solidifying compound 302 through the hose 150, through the passage 140, and into the mold cavity 114. In other embodiments, the mold assembly 100 may be used with any suitable device for supplying the solidifying compound 302 through the passage 140 formed through the body 102. In some embodiments, a mold system may include the mold assembly 100, the injector tool 400, the solidifying compound 302 and/or the hose 150.

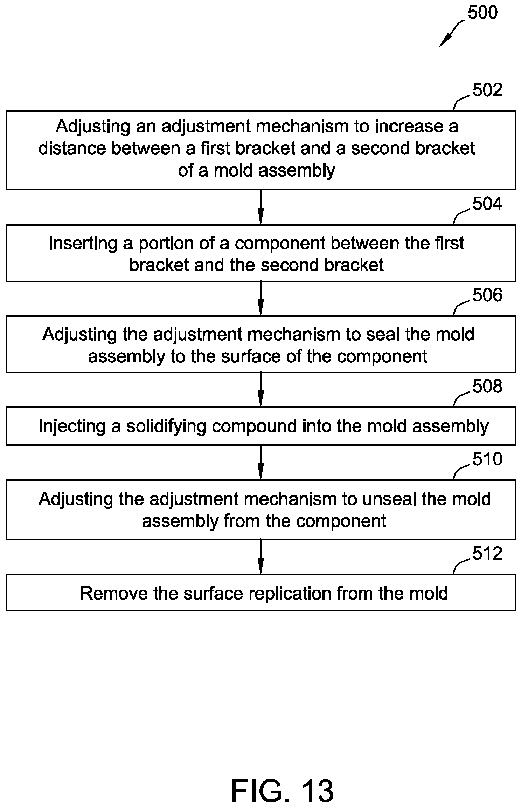

Fig. 13 is a process flow diagram of an example method 500 that may be used to create the surface replica 300 using the mold assembly 100 shown in Fig. 1. In some embodiments, the method includes adjusting 502 the adjustment mechanism 110 to increase the distance between the first bracket 104 and the second bracket 106 such that the distance between the first bracket 104 and the second bracket 106 is wide enough such that at least a portion of a component 200 may be inserted through the body opening 108 to be disposed between the first bracket 104 and the second bracket 106. For example, in some embodiments, the method includes rotating the threaded bolt 170 in a first direction thereby reducing the compressive force across the first bracket 104, second bracket 106, and middle bracket 130 causing the first and second brackets 104, 106 to move away from each other.

The method includes inserting 504 at least a portion of the component 200 through the body opening 108, such that the component 200 is disposed between the first bracket 104 and the second bracket 106. In some embodiments, the method 500 may include inserting the component 200 within the mold cavity 114 until the component 200 comes into contact with the middle seal portion 166, such that the component 200 sealingly engages with the middle seal portion 166. Since the middle seal portion 166 extends away, e.g., inward, the component 200 may be spaced a separation distance between the middle bracket 130, such that solidifying compound 302 may flow between the component 200, e.g., an edge 204 of the component 200, and the middle inner surface 136.

The method 500 also includes adjusting 506 the adjustment mechanism 110 to decrease the distance between the first bracket 104 and the second bracket 106 and seal the mold assembly 100 to the component 200. The method 500 includes adjusting the adjustment mechanism 110 until the seal 160 contacts, and/or becomes sealingly engaged with the surface 202 of the component 200. For example, the adjustment mechanism 110 may be used to adjust the distance d between the first bracket 104 and the second bracket 106 until the first seal portion 162 and the second seal portion 164 presses against the surface 202 of the component 200 and the seal 160 compresses. For example, in some embodiments, the method 500 includes rotating the threaded bolt 170 in a second direction, opposite the first direction, increasing the compressive force across the first bracket 104, second bracket 106, and middle bracket 130 causing the first and second brackets 104, 106 to move towards each other and pressing the seal 160 against the surface 202 of the component 200.

The method 500 includes injecting 508 into the mold cavity 114 the solidifying compound 302. In some embodiments, the method 500 includes connecting the hose 150 to the passage 140. For example, the method 500 may include inserting at least a portion of the hose 150 into the passage 140. The method may also include injecting the solidifying compound 302, e.g., using the injection tool, in liquid form through the hose 150 and through the passage 140 to fill the mold cavity 114.

After the solidifying compound 302 solidifies, the method 500 may also include adjusting 510 the adjustment mechanism 110 to release the mold from the component 200. For example, the adjustment mechanism 110 is used to widen the distance d between the first bracket 104 and the second bracket 106, as described above. The method 500 may also include 512 removing the surface replica 300 from the mold cavity 114 and/or off the surface 202 of the component 200. The method 500 may also include inspecting the surface replica 300, e.g., using an optical microscope, or any other suitable optical device.

Embodiments of the mold assembly described herein enable the creation of surface replicas that are consistent with a substantially constant thickness and with a suitable thickness that enables the surface replicas to capture surface defects. In some embodiments, the mold assembly includes an adjustment mechanism that enables the mold assembly to be selectively sealingly coupled or uncoupled from different or various locations on a single component or different sized components. In some embodiments, the mold may be selectively coupled to or uncoupled from the component without the use of any tools, such as wrenches or drills, by adjusting the adjustment mechanism.

Further aspects of the present disclosure are provided by the subject matter of the following clauses:
1. A mold for use in creating a surface replication of a surface of a component, the mold comprising: a body including a first bracket and an opposite second bracket spaced a distance from the first bracket, the first bracket includes a first inner surface and the second bracket includes a second inner surface, wherein the first and second inner surfaces define at least a portion of a boundary of a mold cavity; and an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.
2. The mold in accordance with any preceding clause, wherein the body includes a passage defined within at least one of the first bracket and the second bracket such that the passage extends between an inlet and an outlet defined through the boundary of the mold cavity.
3. The mold in accordance with any preceding clause, wherein the body further comprises a middle bracket extending between the first bracket and the opposing second bracket, the middle bracket includes a middle inner surface that defines a portion of the boundary of the mold cavity.
4. The mold in accordance with any preceding clause, wherein the adjustment mechanism includes a threaded bore extending at least partially through at least one of the first bracket and the second bracket, and a threaded bolt sized to couple within the threaded bore such that rotation of the threaded bolt relative to the threaded bore selectively adjusts the distance defined between the first and second brackets.
5. The mold in accordance with any preceding clause, where in the body further includes a seal extending from the inner surfaces of the first bracket and the second bracket, the seal defines at least a portion of the boundary of the mold cavity.
6. The mold in accordance with any preceding clause, wherein the body further includes a seal extending from the first bracket, the second bracket, and the middle bracket, the seal defines at least partially a portion of the boundary of the mold cavity.
7. The mold in accordance with any preceding clause, wherein at least one of the first inner surface, the second inner surface, and the middle inner surface defining a portion of the boundary is concave.
8. The mold in accordance with any preceding clause, wherein the adjustment mechanism comprises a hinge rotationally coupling the first bracket and the second bracket and a biasing mechanism for selectively adjusting rotations of the hinge to enable the distance between defined between the first bracket and the second bracket to be selectively adjusted.
9. The mold in accordance with any preceding clause, wherein the first and second brackets are composed of a first material and the seal is composed of a second material that is different than the first material.
10. A mold system for use in creating a surface replication of a surface of a component, the mold system comprising: a reservoir for use in storing a solidifying compound; an injection tool fluidically connected to the reservoir; and a mold comprising: a body including a first bracket and an opposite second bracket spaced a distance from the first bracket, the first bracket includes a first inner surface and the second bracket includes a second inner surface, wherein the first and second inner surfaces define at least a portion of a boundary of a mold cavity; and an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.
11. The mold system in accordance with any preceding clause, wherein the body includes a passage defined within at least one of the first bracket and the second bracket such that the passage extends between an inlet and an outlet defined through the boundary of the mold cavity.
12. The mold system in accordance with any preceding clause, wherein the body further comprises a middle bracket extending between the first bracket and the opposing second bracket, the middle bracket includes a middle inner surface that defines a portion of the boundary of the mold cavity.
13. The mold system in accordance with any preceding clause, wherein the adjustment mechanism includes a threaded bore extending at least partially through at least one of the first bracket and the second bracket, and a threaded bolt sized to couple within the threaded bore such that rotation of the threaded bolt relative to the threaded bore selectively adjusts the distance defined between the first and second brackets.
14. The mold system in accordance with any preceding clause, where in the body further includes a seal extending from the inner surfaces of the first bracket and the second bracket, the seal defines at least a portion of the boundary of the mold cavity.
15. The mold system in accordance with any preceding clause, wherein the body further includes a seal extending from the first bracket, the second bracket, and the middle bracket, the seal defines at least partially a portion of the boundary of the mold cavity.
16. The mold system in accordance with any preceding clause, wherein at least one of the first inner surface, the second inner surface, and the middle inner surface defining a portion of the boundary is concave.
17. The mold system in accordance with any preceding clause, wherein the adjustment mechanism comprises a hinge rotationally coupling the first bracket and the second bracket and a biasing mechanism for selectively adjusting rotations of the hinge to enable the distance between defined between the first bracket and the second bracket to be selectively adjusted.
18. The mold system in accordance with any preceding clause, wherein the first and second brackets are composed of a first material and the seal is composed of a second material that is different than the first material.
19. A method of creating a surface replication of a surface of a component, the method comprising: providing a mold assembly defining a mold cavity, the mold assembly including a first bracket, a second bracket, and an adjustment mechanism for selectively increasing or decreasing a distance defined between the first and second brackets; adjusting the adjustment mechanism to selectively increase a distance defined between the first bracket and the second bracket of the mold assembly; inserting a portion of a component between the first bracket and the second bracket; and adjusting the adjustment mechanism to cause the mold assembly to be in sealing contact with a portion of the surface of the component.
20. The method in accordance with any preceding clause, wherein the method comprises: injecting a solidifying compound into the mold cavity.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments of systems and methods, including the best mode, and also to enable any person skilled in the art to practice the systems and methods, including making and using any devices or systems and performing any incorporated methods. The patentable scope of the systems and methods is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A mold for use in creating a surface replication of a surface of a component, the mold comprising:
a body including a first bracket and an opposite second bracket spaced a distance from the first bracket, the first bracket includes a first inner surface and the second bracket includes a second inner surface, wherein the first and second inner surfaces define at least a portion of a boundary of a mold cavity; and
an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.

2. The mold in accordance with Claim 1, wherein the body includes a passage defined within at least one of the first bracket and the second bracket such that the passage extends between an inlet and an outlet defined through the boundary of the mold cavity.

3. The mold in accordance with Claim 1, wherein the body further comprises a middle bracket extending between the first bracket and the opposing second bracket, the middle bracket includes a middle inner surface that defines a portion of the boundary of the mold cavity.

4. The mold in accordance with Claim 1, wherein the adjustment mechanism includes a threaded bore extending at least partially through at least one of the first bracket and the second bracket, and a threaded bolt sized to couple within the threaded bore such that rotation of the threaded bolt relative to the threaded bore selectively adjusts the distance defined between the first and second brackets.

5. The mold in accordance with Claim 1, where in the body further includes a seal extending from the inner surfaces of the first bracket and the second bracket, the seal defines at least a portion of the boundary of the mold cavity.

6. The mold in accordance with Claim 3, wherein the body further includes a seal extending from the first bracket, the second bracket, and the middle bracket, the seal defines at least partially a portion of the boundary of the mold cavity.

7. The mold in accordance with Claim 3, wherein at least one of the first inner surface, the second inner surface, and the middle inner surface defining a portion of the boundary is concave.

8. The mold in accordance with Claim 1, wherein the adjustment mechanism comprises a hinge rotationally coupling the first bracket and the second bracket and a biasing mechanism for selectively adjusting rotations of the hinge to enable the distance between defined between the first bracket and the second bracket to be selectively adjusted.

9. The mold in accordance with Claim 5, wherein the first and second brackets are composed of a first material and the seal is composed of a second material that is different than the first material.

10. A mold system for use in creating a surface replication of a surface of a component, the mold system comprising:
a reservoir for use in storing a solidifying compound;
an injection tool fluidically connected to the reservoir; and
a mold comprising:
a body including a first bracket and an opposite second bracket spaced a distance from the first bracket, the first bracket includes a first inner surface and the second bracket includes a second inner surface, wherein the first and second inner surfaces define at least a portion of a boundary of a mold cavity; and
an adjustment mechanism for selectively increasing or decreasing the distance defined between the first and second brackets, wherein the adjustment mechanism may selectively couple the first and second brackets to the surface of the component in sealing contact such that the mold cavity is at least partially defined by the boundary of the mold and the surface of the component.

11. The mold system in accordance with Claim 10, wherein the body includes a passage defined within at least one of the first bracket and the second bracket such that the passage extends between an inlet and an outlet defined through the boundary of the mold cavity.

12. The mold system in accordance with Claim 10, wherein the body further comprises a middle bracket extending between the first bracket and the opposing second bracket, the middle bracket includes a middle inner surface that defines a portion of the boundary of the mold cavity.

13. The mold system in accordance with Claim 10, wherein the adjustment mechanism includes a threaded bore extending at least partially through at least one of the first bracket and the second bracket, and a threaded bolt sized to couple within the threaded bore such that rotation of the threaded bolt relative to the threaded bore selectively adjusts the distance defined between the first and second brackets.

14. The mold system in accordance with Claim 10, where in the body further includes a seal extending from the inner surfaces of the first bracket and the second bracket, the seal defines at least a portion of the boundary of the mold cavity.

15. The mold system in accordance with Claim 12, wherein the body further includes a seal extending from the first bracket, the second bracket, and the middle bracket, the seal defines at least partially a portion of the boundary of the mold cavity.
